# EUROPÄISCHE PATENTANMELDUNG

(11) **EP 1 197 399 A2**
(43) Veröffentlichungstag der Anmeldung: **17.04.2002**
(21) Anmeldenummer: 01123192.5
(22) Anmeldetag: 28.09.2001
(51) Int. Cl.: B60R 21/13

(54) **Überrollschutz und Fahrzeug mit einer derartigen Vorrichtung**

(30) Priorität: 12.10.2000 US 689116
(71) Anmelder: DEERE & COMPANY, Moline, Illinois 61265-8098 (US)
(72) Erfinder: Gayland Surridge, David, Garner, NC 27529 (US); Whitted, Kimberly Anne, Lillington, NC 27546 (US)
(74) Vertreter: Magin, Ludwig Bernhard

(57) **Zusammenfassung**

Geländegängige Fahrzeuge sind häufig mit einem Überrollschutz ausgestattet, welcher nach hinten umgeklappt werden kann, um die Gesamthöhe des Aufbaus zu reduzieren, beispielsweise wenn das Fahrzeug durch eine niedrige Einfahrt fahren oder unter Bäumen eingesetzt werden soll. Solche Überrollschutze weisen Griffe und/oder Verriegelungseinrichtungen auf, die dazu neigen sich in herunterhängenden Ästen etc. zu verfangen.

Es wird ein Überrollschutz (12) vorgesehen, welcher nach rückwärts verschwenkt werden kann, der keine aufwendigen Verriegelungseinrichtungen und keine Griffe aufweist, so dass er eine im Wesentlichen glatte Konstruktion bildet, welche keine oder nur geringe Angriffspunkte für Vegetation darstellen.

## Beschreibung

Die Erfindung betrifft einen Überrollschutz mit wenigstens éinem unteren und einem oberen Rahmenelement und einer Gelenkverbindung, welche das untere und das obere Rahmenelement schwenkbar verbindet, wobei die Gelenkverbindung wenigstens zwei Gelenkelemente aufweist, welche jeweils mit dem unteren bzw. dem oberen Rahmenelement verbunden sind und einen Arm aufweisen, welcher sich jeweils im Wesentlichen in Richtung des jeweils zugehörigen Rahmenelements von einem Absatz weg erstreckt, und wobei die Arme zumindest im Wesentlichen nicht über den Querschnitt der Rahmenelemente hinausragen, sowie ein Fahrzeug.

Geländegängige Fahrzeuge sind häufig mit Überschlagschutzeinrichtungen bzw. Überrollbügeln ausgestattet, die an dem Fahrzeug an eine Bedienerplattform bzw. einen Fahrersitz angrenzend vorgesehen sind und sich nach oben erstrecken, um eine Bedienungsperson zu schützen. Geländegängige Fahrzeuge, wie beispielsweise Mähgeräte mit an der Frontseite angebrachten Mähwerken werden zum Mähen von Gras oder anderen Pflanzen unterhalb von niedrig herabhängenden Ästen oder zwischen dicht stehenden Bäumen, beispielsweise in der Pflege von Obstplantagen, verwendet. Sind solche Fahrzeuge mit Überschlagschutzeinrichtungen ausgestattet, so verfangen sich diese häufig mit tief herabhängenden Ästen, so dass diese Fahrzeuge nicht dicht bei oder unterhalb von Bäumen eingesetzt werden können. Folglich muss ein Mähen in Bereichen in der Nähe von Ästen und Bäumen in einem zusätzlichen Arbeitsgang und unter Verwendung kleiner Mähgeräte beispielsweise in der Art von handgeführten oder handgeschobenen Rasenmähern durchgeführt werden.

Um dieses Problem zu überwinden, werden Überschlagschutzeinrichtungen bzw. Überrollbügel mit Klappmechanismen ausgestattet, die es erlauben, einen oberen Bereich nach rückwärts zu klappen, wenn eine Verwendung in Obstplantagen oder allgemein unter tief herabhängenden Ästen erfolgen soll. Bekannte Überrollbügel weisen Griffe und/oder Verriegelungseinrichtungen auf, welche selbst dann über die eigentliche Außenkontur des Überrollschutzes hinausragen, wenn der Überschlagschutz zusammengefaltet bzw. nach hinten geklappt ist. Darüber hinaus behindern solche überragenden Griffe ein Anbringen von Türen, Seitenteilen, Fenstern etc., welche an die Überrollschutzeinrichtung bzw. den Überrollbügel angefügt werden könnten. Ein solcher Überrollschutz wird beispielsweise in der US-A-5,503,430 gezeigt.

Das der Erfindung zugrunde liegende Problem wird darin gesehen, dass bekannte Überrollschutzeinrichtungen nicht zur Verwendung unterhalb von tief herabhängender Vegetation, wie beispielsweise unter Bäumen, geeignet sind.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Auf diese Weise wird ein Überschlagschutz mit einer Gelenkverbindung zur Verfügung gestellt, die es erlaubt, dass ein oberer Rahmenteil bzw. wenigstens ein oberes Rahmenelement des Überschlagschutzes zwischen einer aufrechten und einer nach rückwärts geklappten bzw. geschwenkten Stellung verschwenkt werden kann. In seiner nach rückwärts geschwenkten Stellung ist das obere Rahmenelement vorzugsweise zumindest im Wesentlichen horizontal ausgerichtet. Die Gelenkverbindung weist zwei identische oder zumindest im Wesentlichen identische Gelenkelemente auf, wobei ein Endbereich eines jeweiligen Gelenkelements mit einem Endbereich eines der Rahmenelemente verbunden ist. Vorzugsweise erfolgt diese Verbindung über eine Art Steckverbindung, beispielsweise in der Art, dass das Rahmenelement durch ein Hohlprofil gebildet wird, in das das jeweilige Gelenkelement zumindest bereichsweise eingesteckt wird. Es ist umgekehrt denkbar, dass die Gelenkelemente zumindest bereichsweise einen hohlen Querschnitt aufweisen. Darüber hinaus kann eine zusätzliche Sicherung, beispielsweise durch eine Verschraubung, erfolgen. Vorzugsweise sind die Rahmenelemente allerdings mit den Gelenkelementen verschweißt. Die gegenüberliegenden Endbereiche der Gelenkelemente sind miteinander gelenkig verbunden.

Um zu bewirken, dass die Gelenkelemente nicht über die Außenkontur der Rahmenelemente bzw. des Überrollschutzes als solchen hinausragen, sind die miteinander zusammenwirkenden Abschnitte oder Endbereiche der Rahmenelemente, welche im Folgenden als Arme bezeichnet werden, derart dimensioniert, dass sie maximal ungefähr die Hälfte des Querschnitts der Rahmenelemente aufweisen. Ihr mit dem jeweiligen Rahmenelement verbundener Endbereich weist in etwa die gleiche Größe wie der Querschnitt der Rahmenelemente auf.

Die Arme weisen jeweils eine erste und eine zweite Öffnung auf, wobei die ersten Öffnungen einen Schwenkzapfen zur Verbindung der Arme aufnehmen können. Die zweiten Öffnungen sind derart ausgebildet, dass sie zumindest in einer Stellung der Rahmenelemente, wobei es sich vorzugsweise um die Stellung handelt, in der sich die Rahmenelemente senkrecht nach oben erstrecken, miteinander fluchten, so dass ein Verriegelungsstift eingesetzt werden kann und die Rahmenelemente gegeneinander gesichert sind.

Die Gelenkelemente bilden einen Absatz, von dem aus sich die Arme weg erstrecken. Dieser Absatz kann derart ausgebildet sein, dass er als Anschlag bzw. als Anlagefläche für das nach rückwärts verschwenkte Rahmenelement dient. Der Absatz kann dann sowohl die Schwenkbewegung des Rahmenelements nach rückwärts begrenzen als auch das Gewicht des verschwenkten Rahmenelements aufnehmen bzw. abstützen.

In der Zeichnung ist ein nachfolgend näher beschriebenes Ausführungsbeispiel der Erfindung dargestellt. Es zeigt:
- Fig. 1: eine Rückansicht eines Fahrzeugs mit einem Überschlagschutz, welcher eine neue Gelenkverbindung aufweist,
- Fig. 2: eine vergrößerte Explosionsdarstellung der Gelenkverbindung mit einem Überschlagschutz,
- Fig. 3: eine vergrößerte Explosionsdarstellung eines einzelnen Gelenkelements und eines Rahmenelements, an dem es befestigbar ist,
- Fig. 4: eine vergrößerte, perspektivische Darstellung eines linken und eines rechten Gelenkelements,
- Fig. 5: den Überrollbügel in einer nach rückwärts und unten gefalteten bzw. geklappten Stellung und
- Fig. 6: eine Verliersicherung für Schwenk- und Verriegelungsstifte der Gelenkverbindung.

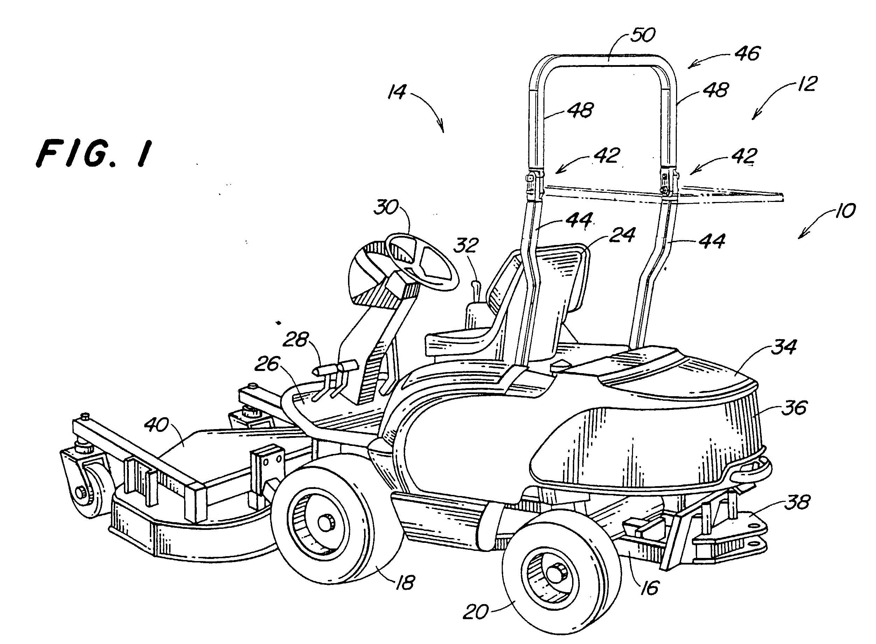

Im Folgenden wird zuerst Figur 1 betrachtet, in der ein Gerät zur Rasen-, Garten- und Grundstückspflege mit einem an seiner Frontseite angebrachten Mähwerk bzw. ein Fahrzeug 10 gezeigt wird, welches einen Überschlagschutz 12 aufweist, welcher hinter und angrenzend an eine Bedienerplattform 14 angeordnet ist. Das Fahrzeug 10 weist einen Rahmen 16 auf, an dem vordere, antreibbare Räder 18 und rückwärtige, lenkbare Räder 20 angebracht sind. Die rückwärtigen Räder 20 können ebenfalls antreibbar bzw. angetrieben sein. Ein vorderer Bereich des Fahrzeugs 10 trägt die Bedienerplattform 14, welche einen Sitz 24, eine Fussstütze oder Bodenplatte 26, Pedale 28, ein Lenkrad 30 und Steuergriffe 32 aufweist. Im Heck des Fahrzeugs 10 ist ein nicht gezeigter Motor angeordnet, der unterhalb einer Haube 34, welche eine Lufteinlassblende 36 aufweist, angeordnet ist und durch sie eingeschlossen wird. Eine Anhängekupplung 38 ist im Heck des Fahrzeugs 10 mit dem Rahmen 16 verbunden und ein Frontmähwerk 40 wird durch den Frontbereich getragen.

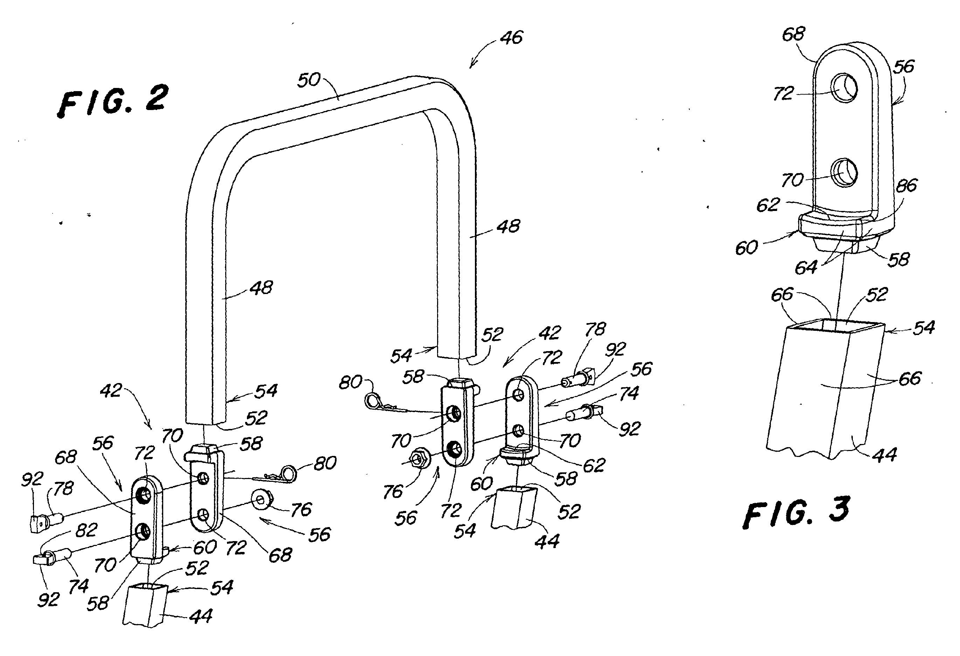

Hinter der Bedienerplattform 14 und sich von dieser nach oben erstreckend ist der Überrollschutz 12 angeordnet, welcher eine Gelenkverbindung 42 aufweist, welche den Gegenstand der vorliegenden Erfindung bildet. Wird nun Figur 2 betrachtet, kann gesehen werden, dass der Überrollschutz 12 linke und rechte untere Rahmenrohre bzw. Rahmenelemente 44 aufweist, welche fest mit dem Fahrzeug 10 verbunden sind. In der bevorzugten Ausführungsform sind sie mit dem Rahmen des Fahrzeugs 10 verschweißt. Der Überrollschutz 12 weist auch einen oberen U-förmigen Bügel bzw. einen Rahmenteil 46 mit linken und rechten, oberen Rahmenelementen 48 auf, welche integral bzw. fest mit einer Querverbindung 50 verbunden sind. Alle Rohre bzw. Rahmenelemente 44, 48 des Überrollschutzes 12 der bevorzugten Ausführungsform sind im Wesentlichen rechteckig ausgebildet und weisen einen hohlen Innenbereich oder Sitz 52 in ihren Endbereichen 54 auf.

Die Gelenkverbindung 42 setzt sich aus zwei identisch ausgebildeten Gelenkelementen 56 zusammen, welche vorzugsweise durch ein Gussverfahren hergestellt sind. Da die beiden die Gelenkverbindung 42 bildenden Gelenkelemente 56 identisch sind, werden beide durch eine Beschreibung eines Gelenkelements 56 abgedeckt. Wie es Figur 3 entnommen werden kann, ist das Gelenkelement 56 im Wesentlichen L-förmig ausgebildet und weist an seinem einen Ende einen Endbereich oder eine Basis 58 auf, welche derart dimensioniert ist, dass sie in dem hohlen Innenbereich oder dem Sitz 52 der Rahmenelemente 44 oder 48 aufgenommen werden kann. Der Endbereich oder die Basis 58 kann mit den Rahmenelementen 44 oder 48 durch ein Verschweißen oder jedes andere passende Mittel, in Abhängigkeit von den zur Herstellung der Rahmenelemente 44, 48 und der Gelenkelemente 56 verwendeten Materialien, verbunden werden. Die kleineren oder unteren Arme 60 des L-förmigen Gelenkelements 56 stellen eine bogenförmige Oberfläche oder einen Absatz 62 zur Verfügung, welcher sich im Wesentlichen in die Richtung erstreckt, in die der obere Rahmenteil 46 geklappt werden soll, d.h. in Längsrichtung. Der Absatz 62 weist einen äußeren Wandbereich 64 auf, der im Wesentlichen gleich groß oder kleiner ist als ein Wandbereich 66 der Rahmenrohre 44 und/oder 48. Mit dem ersten Arm 60 des L-förmigen Gelenkelements 56 verbunden und sich von diesem nach oben erstreckend ist ein länglicher oder zweiter Arm 68 angeordnet, welcher im Wesentlichen gleich groß oder kleiner ist als etwa die Hälfte des Querschnitts 66 der Rahmenelemente 44 und/oder 48. Ein Satz beabstandeter erster und zweiter, sich im Wesentlichen quer erstreckender Öffnungen 70 und 72 ist in dem länglichen Arm 68 jedes der Gelenkelemente 56 vorgesehen.

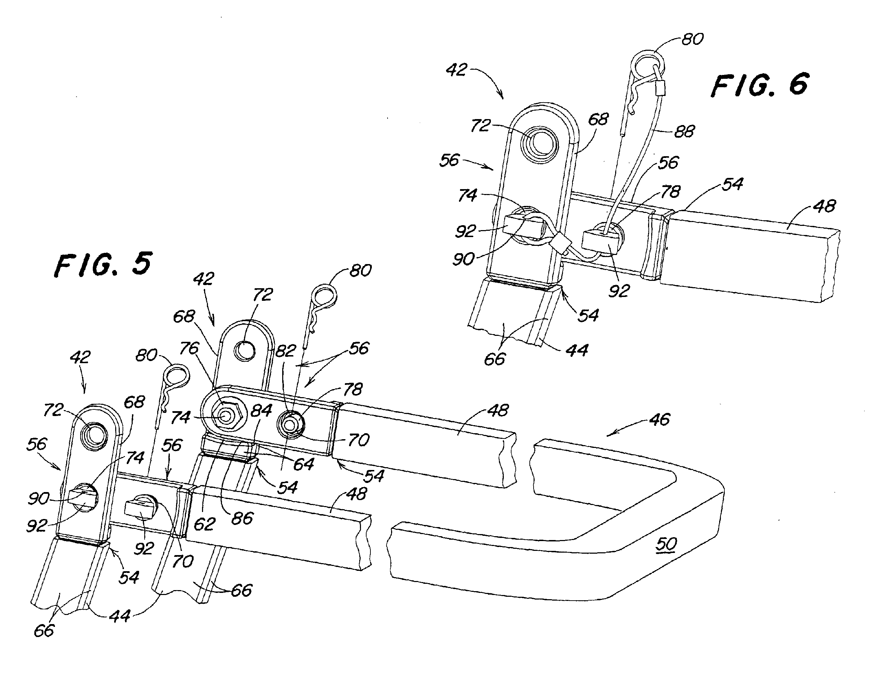

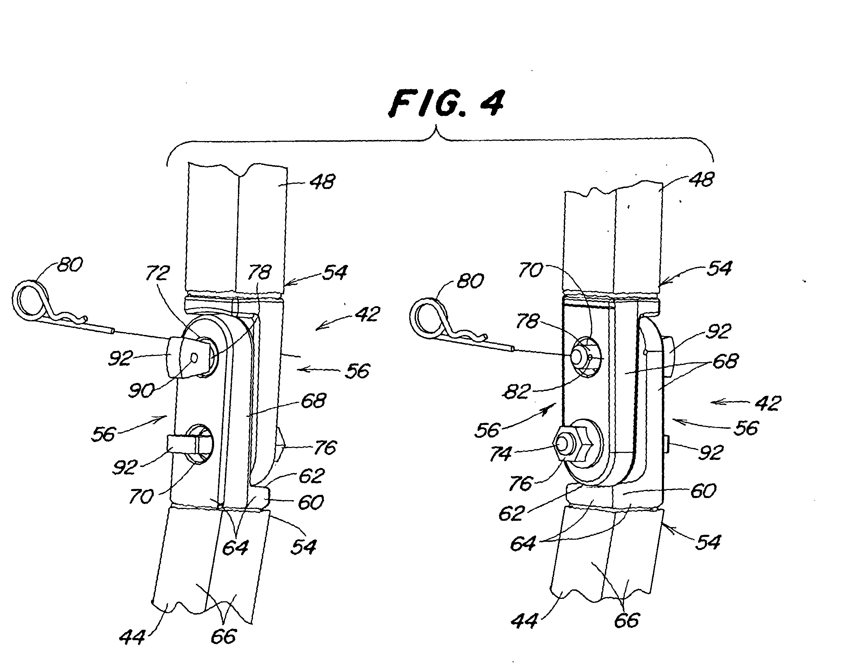

Es werden nun die Figuren 4 und 5 betrachtet, in denen die Gelenkelemente 56 mit entsprechenden Rahmenelementen 44 und 48 in entsprechenden Paaren verbunden sind, um eine Gelenkverbindung 42 zu bilden.

Figur 4 zeigt die Gelenkelemente 56 in ihrer ersten, sich nach oben erstreckenden und fluchtend ausgerichteten Stellung, während Figur 5 die Gelenkelemente 56 in ihrer nicht fluchtenden und nach rückwärts gefalteten bzw. geschwenkten zweiten Stellung darstellt.

Wenn sich die Gelenkelemente 56 in ihrer ersten, sich nach oben erstreckenden und fluchtend ausgerichteten Stellung befinden, wird ein Schwenkzapfen 74, der in der bevorzugten Ausführungsform die Gestalt einer Schraube einnimmt, durch die obere Öffnung 70 in einem der Gelenkelemente 56 und der, welche die obere Öffnung 72 in dem zugehörigen Gelenkelement 56, bildet, aufgenommen, um durch eine Mutter 76 gesichert zu werden. Um eine Schwenkbewegung zu verhindern, wird ein Verriegelungsstift 78 durch einen oberen Satz ausgerichteter Öffnungen 72 in dem einen Gelenkelement 56 und 70 in dem anderen Gelenkelement 56 aufgenommen, und durch einen Federstift 80 gesichert, der in eine Öffnung 82 in dem Verriegelungsstift 78 eingesetzt ist.

Um es den Gelenkelementen 56 zu erlauben zu verschwenken und es dem oberen Rahmenteil 46 zu gestatten, sich in seine gefaltete bzw. in seine nach rückwärts geklappte Stellung, welche in Figur 5 dargestellt ist, zu gelangen, werden die Federstifte 80 aus den Öffnungen 82 entfernt und der obere Rahmenteil 46 wird abgesenkt. Wenn der obere Rahmenteil 46 die in Figur 5 gezeigte Stellung erreicht, wird ein mittlerer Bereich 84 des Gelenkelements 56 eine Anlagefläche 86 des Absatzes 62 oder den zweiten Arm 62 berühren. Diese Anlagefläche 86 stellt eine Begrenzung der Winkelbewegung des oberen Rahmenteils 46 und eine Ablage oder Stütze für ihn dar, wenn er abgesenkt ist.

Wie es in Figur 6 gezeigt wird, wird eine geflochtene Drahtanordnung bzw. eine Verliersicherung 88 zur Verfügung gestellt, um die Wahrscheinlichkeit eines Verlusts eines der Stifte bzw. des Schwenkzapfens 74 und des Verriegelungsstifts 78 zu minimieren, wenn der obere Rahmenteil 46 des Überrollschutzes 12 zwischen seiner ersten und zweiten Stellung bewegt wird. Die Verliersicherung 88 ist in Öffnungen 90 in den Griffbereichen 92 des Schwenkzapfens bzw. des Verriegelungsstifts 76, 78 und um den Federstift 80 herum gesichert. Die Länge der Verliersicherung 88 ist ausreichend, um es zu erlauben, dass die Verriegelungsstifte 78 zwischen den in den Figuren 4 und 5 gezeigten Stellungen bewegt werden, wenn der obere Rahmenteil 46 des Überrollschutzes 12 zwischen seinen angehobenen und abgesenkten Stellungen bewegt wird.

Betrachtet man nun nochmals die Figuren 3 und 4, kann gesehen werden, dass, da ein Paar identischer Gussteile verwendet wird, um die Gelenkverbindung 42 zwischen den unteren und den oberen Rahmenelemente 44 und 48 zu bilden, und da die überlappenden länglichen Bereiche bzw. die Arme 68 etwa die Hälfte des Querschnitts 66 der Rahmenelemente 44 und 48 einnehmen, die Gesamtgestalt der zwei zusammenwirkenden Gelenkelemente 46, das heißt der Gelenkverbindung 42 ungefähr genau so groß oder kleiner ist, als der Querschnitt 66 der Rahmenelemente 44 und/oder 48, mit denen zusammen sie verwendet werden. Da nur kleine Bereiche des Verriegelungsstifts 78 und des Schwenkzapfens 74 sich über den Querschnitt 66 der Rahmenelemente 44 und/oder 48 hinaus erstrecken, ergibt sich nur wenig Struktur, um sich mit Zweigen oder tief herabhängendem Gebüsch zu verfangen, wenn das Fahrzeug 10 und der zurückgeklappte Überrollschutz 12 darunter hindurch fahren.

Durch das relativ saubere und glatte Profil der Rahmenelemente 44, 48 und der Gelenkverbindung 42, welche zwischen ihnen zur Verfügung gestellt wird, können Seitenscheiben, Heckscheiben oder Seitenteile leicht zu dem Überrollschutz 12 hinzugefügt werden, ohne von sich nach außen erstreckenden Bestandteilen der Gelenkverbindung 42 behindert zu werden. Dies bietet eine zusätzliche Vielseitigkeit und zusätzliche Einsatzmöglichkeiten für Fahrzeuge, welche mit dieser Art von Gelenkverbindung 42 für einen Überrollschutz 12 ausgestattet sind.

## Patentansprüche

1. Überrollschutz (12) mit wenigstens einem unteren und einem oberen Rahmenelement (44, 48) und einer Gelenkverbindung (42), welches das untere und das obere Rahmenelement (44, 48) schwenkbar verbindet, wobei die Gelenkverbindung (42) wenigstens zwei Gelenkelemente (56) aufweist, welche jeweils mit dem unteren bzw. dem oberen Rahmenelement (44, 48) verbunden sind und einen Arm (68) aufweisen, welcher sich jeweils im Wesentlichen in Richtung des jeweils zugehörigen Rahmenelements (44, 48) von einem Absatz (60) weg erstreckt und wobei die Arme (68) zumindest im Wesentlichen nicht über den Querschnitt (66) der Rahmenelemente (44, 48) hinausragen, **dadurch gekennzeichnet, dass** die Arme (68) jeweils wenigstens eine erste und eine zweite Öffnung (70, 72) aufweisen, wobei die ersten Öffnungen (70) zur Aufnahme eines die Arme (68) schwenkbar verbindenden Schwenkzapfens (74) und die zweiten Öffnungen (72) zur Aufnahme eines Verriegelungsstifts (78) dienen, durch den die Rahmenelemente (44, 48) mit Bezug zueinander in wenigstens einer Stellung festlegbar sind.

2. Überrollschutz nach Anspruch 1, **dadurch gekennzeichnet, dass** der Absatz (60) eine Anlagefläche (86) für zumindest eines der Rahmenelemente (44, 48) bildet.

3. Überrollschutz nach Anspruch 2, **dadurch gekennzeichnet, dass** das Rahmenelement (44, 48) in einer seiner Stellungen, welche vorzugsweise einer um etwa 90° nach rückwärts geklappten Stellung entspricht, an dem Absatz (60) anliegt.

4. Überrollschutz nach einem oder mehreren der vorherigen Ansprüche, **dadurch gekennzeichnet, dass** die Rahmenelemente (44, 48) mit den Gelenkelementen (56) über eine Steckverbindung verbunden sind.

5. Überrollschutz nach einem oder mehreren der vorherigen Ansprüche, **dadurch gekennzeichnet, dass** die Rahmenelemente (44, 48) zumindest bereichsweise als ein Hohlprofil, vorzugsweise ein Vierkantprofil, ausgebildet sind.

6. Überrollschutz nach einem oder mehreren der vorherigen Ansprüche, **dadurch gekennzeichnet, dass** sowohl die Gelenkelemente (56) als auch die Rahmenelemente (44, 48) aus Metall bestehen und vorzugsweise durch Verschweißen gesichert sind.

7. Fahrzeug (10), insbesondere ein geländegängiges Fahrzeug bzw. ein Fahrzeug zur Rasen-, Garten- und Grundstückspflege mit einem Überrollschutz (12) nach einem oder mehreren der vorherigen Ansprüche.
